# EUROPÄISCHE PATENTANMELDUNG

(11) **EP 2 868 407 A2**
(43) Veröffentlichungstag der Anmeldung: **06.05.2015**
(21) Anmeldenummer: 14191441.6
(22) Anmeldetag: 03.11.2014
(51) Int. Cl.: B22F 3/10, F27B 17/02, C04B 35/64, A61C 13/00, A61C 13/14

(54) **Sintervorrichtung**

(30) Priorität: 04.11.2013 DE 202013104916 U
(71) Anmelder: Thermo-Star GmbH, 52070 Aachen (DE)
(72) Erfinder: Franzen, Ralf, 52070 Aachen (DE); Kullmann, Friedrich, 52388 Nörvenich (DE); Schütz, Roland, 01744 Dippoldiswalde (DE)
(74) Vertreter: Jostarndt, Hans-Dieter

(57) **Zusammenfassung**

Die vorliegende Erfindung betrifft eine Sintervorrichtung zum Sintern von Werkstücken in einer Schutzgasatmosphäre, wobei die Sintervorrichtung mit einer Schutzgaszufuhr und einer Schutzgasabfuhr so ausgestattet ist, dass ein Überdruck in der Sintervorrichtung erzeugt wird. Die Erfindung betrifft weiterhin ein Verfahren zur Sintern von Werkstücken und insbesondere dentalen Werkstücken unter Verwendung der erfindungsgemäßen Sintervorrichtung.

## Beschreibung

Die vorliegende Erfindung betrifft eine Sintervorrichtung zum Sintern von Werkstücken in einer Schutzgasatmosphäre, wobei die Sintervorrichtung mit einer Schutzgaszufuhr und einer Schutzgasabfuhr so ausgestattet ist, dass die Schutzgasführung durch ein Rohr mit einem Innenquerschnitt R als erstem Kompartiment und durch einen Spalt zwischen dem Rohr und der Bohrung als zweitem Kompartiment mit einer Spaltfläche S erfolgt, und wobei die Fläche des gaszuführenden Kompartimentes größer ist als die Fläche des gasabführenden Kompartiments (R>S oder S>R).

Beim Sintern werden feinkörnige, keramische oder metallische Stoffe - oft unter erhöhtem Druck - erhitzt, wobei die Temperaturen jedoch unterhalb der Schmelztemperatur der Hauptkomponenten bleiben, so dass die Gestalt (Form) des Werkstückes erhalten bleibt. Dabei kommt es in der Regel zu einer Schwindung, weil sich die Partikel des Ausgangsmaterials verdichten und Porenräume aufgefüllt werden. Man unterscheidet grundsätzlich das Festphasensintern und das Flüssigphasensintern, bei dem es auch zu einer Schmelze kommt. Sinterprozesse besitzen große Bedeutung bei der Keramikherstellung ("Sinterglaskeramik") und in der Metallurgie ("Sintermetalle" und "Pulvermetallurgie"). Es ist üblich bei der Herstellung von Sintermetallgegenständen aus Metallpulver den Sintervorgang unter Schutzgasatmosphäre durchzuführen. Hierbei wird in der Regel Argon als preiswertestes Edelgas eingesetzt. Es hat sich hierbei aber herausgestellt, dass selbst beim gründlichen Fluten des Ofenraums noch Restsauerstoff vorhanden ist, der zur Oxidation und Verfärbung des Sinterguts führt. Die Anwesenheit von Restsauerstoff ist insbesondere in der Dentaltechnik störend, wo die Sintertechnologie auch für verschiedene Arbeiten wie Verblendungen oder das Sintern von CrCo-Grünkörpern eingesetzt wird.

Unter Schutzgas arbeitende Sintergasvorrichtungen sind aus dem Stand der Technik bekannt. So offenbart die Druckschrift WO 2011/020688 A1 eine Sintervorrichtung die einen geschlossenen Sinterraum mit eigener Schutzgaszufuhr und Abfuhr aufweist, der somit von dem eigentlichen Sinterofen getrennt ist.

Als Verbesserung schlägt die WO2013/053950 eine Sintervorrichtung vor, bei der das Schutzgas mittels einer Schutzgaszufuhr einleitbar und mittels einer Schutzgasabfuhr abführbar ist, wobei zwischen Schutzgaszufuhr und Schutzgasabfuhr ein Strömungskanal mit verringertem Querschnitt angeordnet ist. Durch den verringerten Querschnitt entsteht in dem Strömungskanal nach Art des Venturi-Effekts ein Unterdruck, der für einen Abtransport des Restsauerstoffs über die Schutzgasabfuhr sorgt. Diese Vorrichtung ist relativ komplex aufgebaut, da sie neben getrennt angebrachten Leitungen für Schutzgaszufuhr und -abfuhr noch einen zusätzlichen Strömungskanal vorsieht. Zudem besteht bei dieser Vorrichtung das Risiko, dass durch den Venturi-Effekt vermittelten Unterdruck Sauerstoff in die Sintervorrichtung eingesaugt wird. Eine solche Undichtigkeit stellt insbesondere die Auflagefläche der Bodenplatte dar. Wie in der die WO2013/053950 im Paragraph [0007] ausgeführt, entsteht aufgrund der Temperaturen und/oder Ausdehnungskoeffizienten der Werkstoffe sowie des Gasdrucks oder auch anhand von Oxidresten ein "Luftspalt", wodurch Sauerstoff an der umleitenden Auflagefläche der Bodenplatte, auf der die Haube sitzt, eindringen kann.

Aufgabe der Erfindung ist es daher eine gattungsgemäße Sintervorrichtung dahingehend zu verbessern, dass sie bezüglich mindestens einer der oben genannten Nachteile verbessert wird.

Diese Aufgabe wird gemäß der Erfindung dadurch gelöst, dass eine Vorrichtung zum Sintern von Werkstücken in einer Schutzgasatmosphäre bereitgestellt wird, die mit einer Schutzgaszufuhr und einer Schutzgasabfuhr versehen ist, wobei die Schutzgasführung durch ein Rohr mit einem Innenquerschnitt R als erstem Kompartiment und durch einen Spalt zwischen diesem Rohr und der Bohrung als zweitem Kompartiment mit einer Spaltfläche S erfolgt, wobei Fläche des gaszuführenden Kompartimentes größer ist als die Fläche des gasabführenden Kompartiments (R>S oder S>R).

Hierbei wurde in überraschender Weise deutlich, dass die erfindungsgemäße Ausgestaltung einen kontrollierten Schutzgasüberdruck erzeugt, der den vorhandenen Restsauerstoff aus der Sintervorrichtung austreibt.

Die erfindungsgemäße Sintervorrichtung vereinigt mehrere entscheidende Vorteile gegenüber den aus dem Stand der Technik bekannten Sintervorrichtungen.

Da für die Schutzgaszufuhr und -abfuhr nur eine Bohrung erforderlich ist, ist die Vorrichtung einfacher herzustellen. Dies ist insbesondere bei den oft extrem harten und spröden Materialien von Vorteil, wie sie üblicherweise im Ofenbau verwendet werden (wie beispielsweise Siliziumcarbid (SiC)).

Durch Verwendung eines entsprechend dimensionierten Rohres kann der Überdruck kontrolliert eingestellt werden.

Da das Rohr nicht fest mit der Sintervorrichtung verbunden ist, kann es auch aus einem anderen Material aufgebaut sein. Zudem erlaubt dies einen einfachen Austausch des Rohres, um beispielsweise andere Druckbedingungen einzustellen.

Es hat sich gezeigt, dass die vorliegende Ausgestaltung zu einer Reduzierung der erforderlichen Gasflussrate führt. So können qualitativ hochwertige Sinterprodukte mit Gasflussraten von nur 0,2 L/min erzielt werden.

Mit der vorliegenden Sintervorrichtung können alle denkbaren Werkstoffe, also sowohl keramische oder metallische Stoffe, gesintert werden. In der Sintervorrichtung können auch die initial erzeugten Grünkörper durch Austreiben von Feuchtigkeit und/oder Bindemittel für den eigentlichen Sinterprozess vorbereitet werden.

Die vorliegende Ausgestaltung erlaubt es zudem, den Überdruck in Abhängigkeit von der Ofentemperatur zu steuern. Sind Rohr und Bodenplatte aus Materialien mit unterschiedlichem Ausdehnungskoeffizient, so wird beim Brennvorgang durch die unterschiedliche Ausdehnung von Rohr und Bohrung ein unterschiedlicher Überdruck resultieren. Durch Auswahl einer geeigneten Materialkombination könnte man so einen anfänglich größeren Überdruck, der für das initiale Austreiben des Sauerstoffs notwendig ist, in einen geringeren Überdruck überführen, der dann über die Dauer des Sintervorgangs aufrechterhalten wird.

Weiterhin bietet das Zusammenführen von Schutzgaszufuhr und Schutzgasabfuhr in einer Bohrung den Vorteil, dass Verwirbelungen innerhalb der Sintervorrichtung minimiert werden. Diese Verwirbelungen könnten das Austreiben des Sauerstoffs erschweren oder zu inhomogenen Sinterbedingungen führen.

Diese Ausgestaltung mit minimierter Gasverwirbelung erlaubt es auch, bei der Sinterschale auf die Abdeckung zu verzichten. Diese kann als oben offene Schale ausgestaltet werden. Dies hat zusätzlich den Vorteil, dass beim Fluten der Vorrichtung mit Argon der Sauerstoff als das leichtere Gas aus der Sinterschale nach oben verdrängt wird, wo er durch den Schutzgasüberdruck aus der Sintervorrichtung ausgetrieben werden kann.

In einer Ausführungsform der Erfindung steht die Querschnittsfläche des gaszuführenden Kompartimentes in einem Verhältnis zu der Querschnittsfläche des gasabführenden Kompartimentes, das zwischen 1,05:1 und 2,8:1, bevorzugt zwischen 1,1:1 und 2:1 und besonders bevorzugt zwischen 1,2: 1 und 1,5:1 liegt. Je größer hier das Verhältnis der Querschnittsflächen ist, desto größer ist auch der resultierende Überdruck. Das gewünschte Querschnittsverhältnis kann durch mehrere Parameter eingestellt werden. So kann der Außendurchmesser des Rohres, die Wanddicke des Rohres oder der Bohrungsdurchmesser variiert werden.

Bei einem entsprechend gewählten Verhältnis der Querschnittsflächen zwischen 1,2:1 und 1,5:1, bei der bevorzugt der Gaszufluss durch das Rohr und der Gasabfluss durch den Spalt erfolgt, wird in der Sintervorrichtung ein Überdruck von ca. 0,2 bar erzeugt.

Das erfindungsgemäß verwendete Rohr kann jeden beliebigen Querschnitt aufweisen. Bevorzugt ist hier ein Rohr mit einem eckigen, einem ellipsoiden oder einem kreisrunden Querschnitt, wobei ein runder Querschnitt besonders bevorzugt ist.

In einer bevorzugten Ausführungsform der Erfindung ist das Rohr als Innenrohr eines Koaxialrohres ausgestaltet, wobei dann der Spalt zwischen Rohr und Bohrung in das Außenrohr des Koaxialrohres mündet.

In einer besonders bevorzugten Ausführungsform besitzt das Koaxialrohr eine Länge von mindestens 80 mm, bevorzugt von mindestens 90 mm und besonders bevorzugt von mindestens 105 mm.

In einer weiteren Ausführungsform ist das äußere Rohr des Koaxialrohrs im unteren, d.h. von der Sintervorrichtung abgewandten Teil abgeknickt, so das die Gaszufuhr durch das innere Rohr von unten erfolgt und die Gasabfuhr seitlich durch das äußere Rohr erfolgt.

Geeigneterweise ist der abknickende Teil des Außenrohrs aus einem anderen Material. Da dieser Teil nicht den hohen Temperaturen ausgesetzt ist, wie sie in der Sintervorrichtung erreicht werden, kann er auch aus einem beliebigen, d.h. nicht hitzebeständigen Material bestehen.

Bei einer Ausgestaltung als Koaxialrohr sind der Gaszustrom und der Gasabstrom nur durch das zentrale Rohr getrennt. Hierdurch kann das heiße aus dem Ofen strömende Gas durch Erhitzen des Rohres bereits im Bereich des Koaxialrohres das einströmende Gas vorwärmen. Dies erlaubt eine einfache und sichere Schutzgasvorwärmung, die eine übermäßige Gaskonvektion im Ofen verhindert. Durch das Vorwärmen wird insbesondere verhindert, dass kaltes Gas in die Sintervorrichtung und speziell auf das Sintergut trifft, was ansonsten zu thermischen Spannungen führt oder zur Veränderung der Oberfläche (bspw. Anlauffarben) oder zur Porenbildung führen kann.

Durch geeignete Wahl des Rohrmaterials und der Wanddicke des Rohres kann das Ausmaß der Vorwärmung gezielt gesteuert werden.

In einer Ausführungsform der Erfindung beträgt der Außendurchmesser des Rohres zwischen 4 und 25 mm, bevorzugt zwischen 5 und 20 mm und besonders bevorzugt zwischen 6 und 10 mm.

In einer weiteren Ausführungsform der Erfindung beträgt der Innendurchmesser des Rohres zwischen 1 und 23 mm, bevorzugt zwischen 5 und 10 mm und besonders bevorzugt zwischen 4 und 6 mm.

In einer zusätzlichen Ausführungsform der Erfindung beträgt die Wanddicke des Rohres zwischen 1 und 5 mm, bevorzugt zwischen 1 und 4 mm und besonders bevorzugt zwischen 1 und 3 mm.

In einer weiteren Ausführungsform der Erfindung beträgt die Innenquerschnittsfläche des Rohres zwischen 0,8 und 415 mm², bevorzugt zwischen 13 und 80 mm² und besonders bevorzugt zwischen 20 und 28 mm².

Zweckmäßigerweise liegt bei der erfindungsgemäßen Vorrichtung der Durchmesser der Bohrung zwischen 5 und 30 mm, bevorzugt zwischen 6 und 20 mm und besonders bevorzugt zwischen 7 und 10 mm.

In einer Ausführungsform der Erfindung beträgt die Fläche des Spaltes zwischen Rohr und Bohrung zwischen 3 und 176 mm², bevorzugt zwischen 6 und 31 mm² und besonders bevorzugt zwischen 8 und 14 mm².

In einer bevorzugten Ausführungsform der Erfindung besteht das Rohr aus Tantal, SiC, Zirkoniumdioxid, Aluminiumoxid (Sinterkorund), Yttrium-stabilisierten Zirconium(IV)-oxid (YSZ), Quarzglas, Glaskeramik, VA-Stahl oder einem anderen hitzebeständigen Material und bevorzugt aus einem Keramikmaterial oder aus einer Kombination der genannten Werkstoffe.

Besonders bevorzugt sind hierbei die Werkstoffe SiC oder Tantal.

In einer bevorzugten Ausführungsform der Erfindung weist die Sintervorrichtung einen Sinterraum (5) auf, der durch eine Basisplatte (6) und eine Abdeckung (7) gebildet wird und mindestens eine Sintergutschale (8) enthält..

In einer weiterhin bevorzugten Ausführungsform liegt die mindestens eine Sintergutschale (8) auf der Basisplatte (6) auf. Besonders bevorzugt ist hier eine Sintervorrichtung mit nur einer Sintergutschale.

Bei der Verwendung von mehreren Sintergutschalen können diese übereinandergestapelt werden. In bevorzugter Weise schließt hierbei die obere Sintergutschale die untere formschlüssig ab, so dass sie wie eine gasstrommäßig nicht verbindende Abdeckung wirkt. Die oberste dieser gestapelten Sintergutschalen kann hierbei oben offen sein oder eine Abdeckung aufweisen.

In einer weiteren Ausführungsform der Erfindung enthält die Sintergutschale neben dem Sintergut noch Perlen aus Zirkoniumoxid oder Yttrium-stabilisiertem Zirkoniumoxid (YSZ), die während des Brennvorgangs den freiwerdenden Kohlenstoff aufnehmen. In einer alternativen Ausführungsform ist die Sintergutschale auf der Innenseite zumindest teilweise mit Zirkoniumoxid oder YZS beschichtet oder mit einer zusätzlichen YZS oder Zirkoniumoxid-beschichteten Platte ausgestattet. In bevorzugter Weise ist diese YZS/Zirkoniumoxid-beschichtete Oberfläche (bspw. durch Abschleifen) als glatte Oberfläche ausgeformt. Dies erlaubt das Brennen auch größerer Sinterobjekte, die dann in geeigneter Weise mit Füßchen versehen sind.

In einer bevorzugten Ausführungsform der Erfindung weist bei der Vorrichtung die Basisplatte die Bohrung für die Schutzgaszufuhr und -abfuhr auf. Dies hat den Vorteil, dass das Gas von unten auf die Sintergutschale trifft und damit die Gefahr von Gaswirbeln und damit verbunden Sinterinhomogenitäten minimiert wird.

Zweckmäßigerweise ist bei der erfindungsgemäßen Vorrichtung die Sintergutsschale im oberen Bereich offen. Durch die erfindungsgemäß vorteilhafte Gaszufuhr und - abfuhr ist eine besondere Abdeckung der Sintergutschale nicht erforderlich. Sie kann daher als einfache Schale ausgeformt werden.

In einer alternativen Ausführungsform ist die Sintergutschale mit einer Abdeckung versehen, die in bevorzugter Weise keine gasstrommäßige Verbindung zwischen dem Innenraum der Sintergutschale und dem umgebenden Sinterraum erlaubt. Dies kann dadurch gewährleistet werden, dass die Abdeckung ein Deckel mit einem plan geschliffenen Rand ist, der formschlüssig auf einem oberen Rand der Sintergutschale aufliegt. Diese Ausgestaltung erlaubt das Entweichen von überschüssigem Gas aus der Sintergutschale, verhindert aber das Einströmen des im Sinterraum zirkulierenden Schutzgases.

In einer bevorzugten Ausführungsform besteht diese Abdeckung aus Siliziumcarbid, das besonders bevorzugt mit Aluminiumoxid oder (Yttrium-stabilisiertem) Zirkoniumoxid beschichtet ist.

In einer Ausführungsform der Erfindung ist zwischen der Sintergutschale und der Abdeckung ein vertikaler Abstand von 0,2 bis 20 mm vorgesehen.

In einer weiteren Ausführungsform der Erfindung ist zwischen der Sintergutschale und Abdeckung ein horizontaler Abstand von 0,2 bis 40 mm vorgesehen ist.

In einer Ausführungsform bestehen die Basisplatte, die Abdeckung und die Sintergutschale aus demselben Werkstoff.

Bevorzugt bestehen hierbei die Basisplatte, die Abdeckung und die Sintergutschale aus den Werkstoffen Siliziumcarbid (SiC), Tantal, Keramik, wie Glaskeramik, Zirkoniumoxid, Aluminiumoxid (Sinterkorund), Yttriumstabilisiertem Zirconium(IV)-oxid (YSZ), Quarzglas, Glaskeramik, VA-Stahl oder einem anderen hitzebeständigen Material. Unter einem hitzebeständigen Material ist im Rahmen der Erfindung ein Material zu verstehen, das eine Temperatur von 1350°C aushält.

In einer Ausführungsform der Erfindung wird die Gaszufuhr, also der eingestellte Druck des Schutzgases über den Sintervorgang hinweg konstant gehalten.

In einer bevorzugten Ausführungsform der Erfindung ist die Gaszufuhr regelbar. Dies ermöglicht es, die Gaszufuhr für die einzelnen Brennphasen des Sintervorgangs gezielt zu steuern. So kann bei einer Brennphase mit besonders hohem Oxidationsrisiko vermehrt Schutzgas zugegeben werden. In einer weiterhin bevorzugten Ausführungsform kann der Brennvorgang durch ein kurzeitiges Spülen mit hohem Gasdruck eingeleitet und/oder beendet werden.

Zur Steuerung der Gaszufuhr sind dem Fachmann zahlreiche Ventilanordnungen und Steuerungsmechanismen bekannt. Mögliche Betätigungsarten der Ventile umfassen handbetätigte Ventile, elektromotorisch betätigte Ventile mit Ventilantrieb, und elektromagnetisch betätigte Ventile. Hierbei können alle dem Fachmann geläufigen Bauarten zur Anwendung kommen wie beispielsweise Tellerventil, Rohrventil, Kolbenventil, Rollmembranventil; Quetschventil, Nadelventil oder Kugelventil.

In einer bevorzugten Ausführungsform wird die Gas-Steuerung mit Hilfe einer Speicherprogrammierbaren Steuerung (SPS) durchgeführt. Im Sinne der Erfindung handelt es sich hierbei um ein digital arbeitendes elektronisches System mit einem programmierbaren Speicher zur internen Speicherung der anwenderorientierten Steuerungsanweisungen zur Implementierung spezifischer Funktionen, wie dem Gasdruck und der Zeitdauer.

In einer weiterhin bevorzugten Ausführungsform wird der Gasfluss durch einen Massedurchflußregler ("Mass flow controller") gesteuert. Hierbei wird zweckmäßigerweise der Gasdurchfluss als Ist-Wert gemessen, mit einem einprogrammierten Soll-Wert verglichen und der Gasfluss durch ein elektronisch gesteuertes Ventil entsprechend geregelt.

In einer Ausführungsform erfolgt die Messung des Gasflusses durch die Abzweigung eines Teils des Gesamtgasstroms, dergestalt, dass sowohl in der primären Gasleitung als auch in der Abzweigungsleitung ein linearer Gasfluss vorliegt und die Flussraten in den beiden Leitungen daher proportional zueinander sind. In einer bevorzugten Ausführungsform wird dann das Gas an zwei Bereichen der Leitung erhitzt und die entsprechende Erwärmung des Gases durch zwei Präzisionsgewickelte Hitzesensor-Wicklungen erfasst. Die resultierende Temperatur-abhängige Widerstandsdifferenz wird elektronisch erfasst. Der gemessene Unterschied an den Hitzesensor-Windungen ist proportional zu der vorliegenden Gasflussrate. Dieses System erlaubt eine schnelle und präzise Messung der Flussrate und ist auf alle Gase anwendbar. Durch Berücksichtigung eines Korrekturfaktors kann die Steuerung an das jeweils verwendete Schutzgas angepasst werden.

Die Gasflussrate wird hierbei bevorzugt bei kleineren Flussraten bis ca. 100 L/min durch ein Magnetventil und bei darüber liegenden Flussraten durch ein motorbetriebenes Ventil geregelt.

Entsprechende Massedurchflußregler sind dem Fachmann bekannt und käuflich erhältlich.

In einer bevorzugten Ausführungsform wird das System FMA 5400/FMA 5500 der Firma Omega Engineering Inc. (Deckenpfronn, BRD) zur Regelung der Gasmenge verwendet.

In einem Aspekt betrifft die Erfindung ein Sinterverfahren, bei dem die Gasdurchflussrate bei den verschiedenen Aufheiz- und/oder Haltephasen des Sintervorgangs unterschiedlich ist.

In einer bevorzugten Ausführungsform umfasst das Sinterverfahren die folgenden Schritte:
1.) Aufheizen mit einer Rampe von 850°C pro Stunde bis auf eine Temperatur von 1280°C bei einer Gasflussrate von 0,8 L/min;
2.) Halten der Temperatur von 1280°C für eine Stunde min bei einer Gasflussrate von 0,6 L/min;
3.) Abkühlen mit einer Rampe von 450°C pro Stunde bis auf ein Temperatur von 900°C bei einer Gasflussrate von 0,8 L/min;
4.) Abkühlen mit einer Rampe von 800°C pro Stunde und einer Gasflussrate von 0,6 L/min, wobei die Abkühlung unterhalb von 600-700°C mit der natürlichen Abkühlgeschwindigkeit erfolgt.

In einer Ausführungsform der Erfindung wird bei dem oben geschilderten Verfahren die Vorrichtung zu Beginn und/oder zu Ende des Brennprogramms für wenige Minuten mit einer erhöhten Flußrate gespült.

In einem Aspekt der Erfindung ist die erfindungsgemäße Sintervorrichtung zum Sintern von dentalen Werkstücken und hier insbesondere für Nichteisenmetalle (NEM) geeignet. Diese Anwendung erfordert eine hohe Brennpräzision und hohe Reinheiten/geringe Verfärbungen, wie es die erfindungsgemäße Vorrichtung auch erlaubt.

In einem weiteren Aspekt betrifft die Erfindung auch ein Verfahren zum Sintern von Werkstücken und insbesondere dentalen Werkstücken, dass dadurch gekennzeichnet ist, dass das Sintern mit der erfindungsgemäßen Sintervorrichtung erfolgt. Entsprechend wird hierbei das zu sinternde Werkstück während des Sintervorgangs in der in dem Sinterraum (5) befindlichen Sintergutschale (8) angeordnet und der Sintervorrichtung (9) über das Rohr (1) Schutzgas zugeführt.

Die Erfindung ist in den Zeichnungen in mehreren Ausführungsbeispielen dargestellt und nachfolgend beschrieben.

Es zeigen:

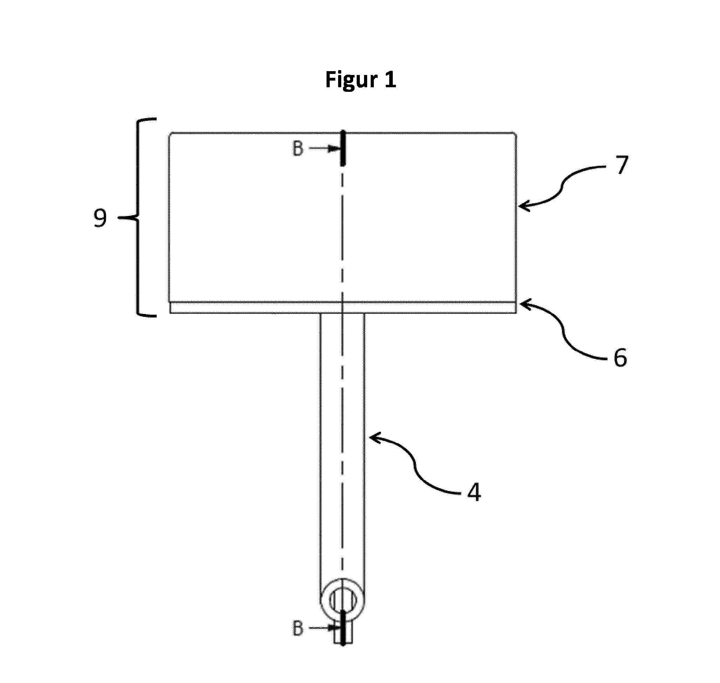

- Fig. 1: eine Sintervorrichtung (9) in Seitenansicht mit der Basisplatte (6), der Abdeckung (7) und dem gaszuleitenden und -ableitenden Koaxialrohr (4).

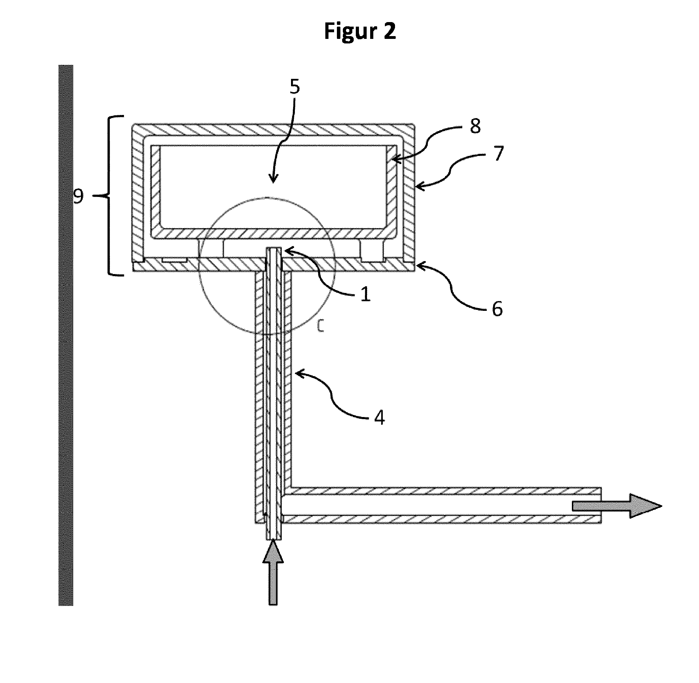

- Fig. 2: eine Sintervorrichtung (9) im Querschnitt B (s. Fig. 1) mit einer Basisplatte (6) die eine Bohrung aufweist, in die das Rohr (1) so einmündet, dass ein Spalt zwischen Rohraußenwand und Bohrung verbleibt. Das Rohr ist zur Gasvorwärmung als Koaxialrohr (4) ausgestaltet. Auf der Bodenplatte steht eine oben geöffnete Sintergutschale (8), die das Sintergut trägt. Die Sintergutschale ist durch eine auf der Basisplatte (6) aufgelegten Haube (7) abgedeckt.

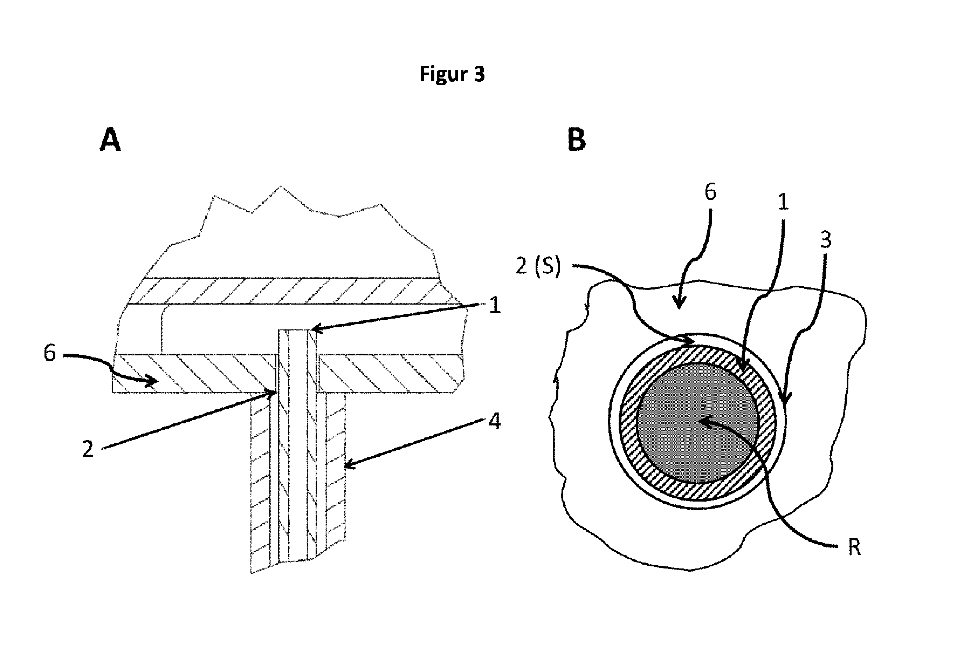

- Fig. 3: (A) der vergrößerte Ausschnitt aus der Sintervorrichtung im Querschnitt im Bereich der Gaszufuhr und -abfuhr mit dem in die Basisplatte (6) eingeführten Rohr (1), dem Spalt (2) zwischen Rohr und Bohrung, wobei das Rohr durch Umfassung mit einem äußeren Rohr als Koaxialrohr (4) ausgestaltet ist; (B) Querschnittsansicht des in der Bohrung (3) der Basisplatte (6) positionierten Rohres (1) mit einem Spalt (2) und einer Spaltfläche S, die kleiner ist als die Innenquerschnittsfläche R des Rohres (1)

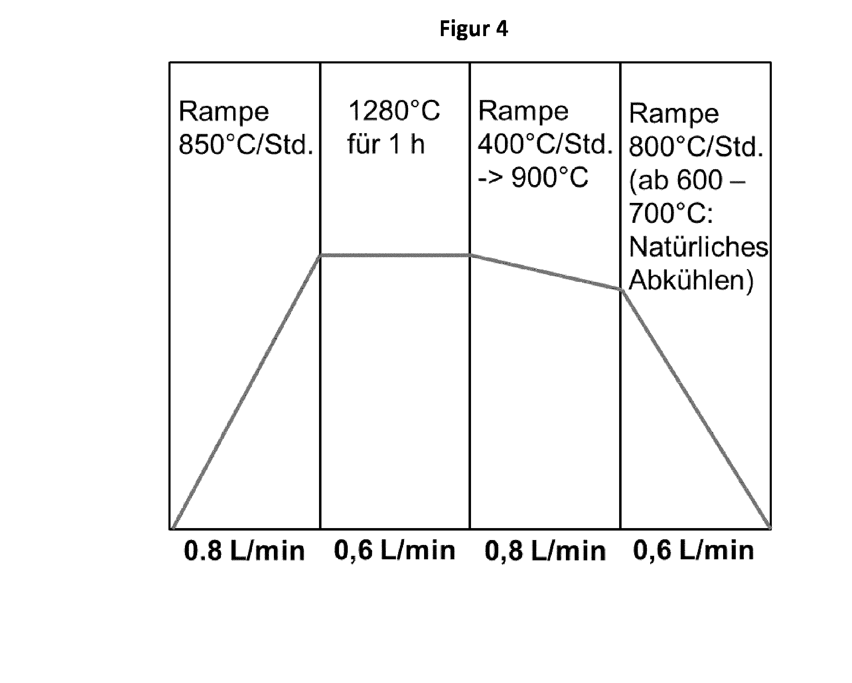

- Fig. 4: eine Brennkurve mit verschiedenen Brennphasen und jeweils abgestimmter Steuerung der Schutzgaszufuhr.

### Bezugszeichenliste

- 1: Rohr
- 2: Spalt
- 3: Bohrung
- 4: Koaxialrohr
- 5: Sinterraum
- 6: Basisplatte
- 7: Abdeckung
- 8: Sintergutschale
- 9: Sintervorrichtung
- C: Vergrößerter Ausschnitt aus der Basisplatte im Bereich der Bohrung
- S: Fläche des Spaltes zwischen Rohr und Bohrung
- R: Innenquerschnitt des Rohres
- B: Schnittfläche des in Figur 2 dargestellten Querschnitts

## Patentansprüche

1. Vorrichtung zum Sintern von Werkstücken in einer Schutzgasatmosphäre, versehen mit einer Schutzgaszufuhr und einer Schutzgasabfuhr, **dadurch gekennzeichnet, dass** die Schutzgasführung durch ein Rohr (1) mit einem Innenquerschnitt R als erstem Kompartiment und durch einen Spalt (2) zwischen dem Rohr und der Bohrung (3) als zweitem Kompartiment mit einer Spaltfläche S erfolgt, wobei Fläche des gaszuführenden Kompartimentes größer ist als die Fläche des gasabführenden Kompartiments (S>R oder R>S).

2. Vorrichtung gemäß Anspruch 1, **dadurch gekennzeichnet, dass** die Fläche des gaszuführenden Kompartimentes in einem Verhältnis zu der Fläche des gasabführenden Kompartimentes steht, dass zwischen 1,05:1 und 2,8:1, bevorzugt zwischen 1,1:1 und 2:1 und besonders bevorzugt zwischen 1,2:1 und 1,5:1 liegt.

3. Vorrichtung gemäß Anspruch 1 oder 2, **dadurch gekennzeichnet, dass** das Rohr (1) einen eckigen, einen kreisrunden oder bevorzugt einen runden Querschnitt aufweist.

4. Vorrichtung gemäß einem der Ansprüche 1 bis 3, **dadurch gekennzeichnet, dass** das Rohr (1) als Innenrohr eines Koaxialrohres (4) ausgestaltet ist, in dessen Außenrohr der Spalt mündet.

5. Vorrichtung gemäß einem der vorherigen Ansprüche, **dadurch gekennzeichnet, dass** der Außendurchmesser des Rohres (1) zwischen 4 und 25 mm, bevorzugt zwischen 5 und 20 mm und besonders bevorzugt zwischen 6 und 10 mm liegt.

6. Vorrichtung gemäß einem der vorherigen Ansprüche **dadurch gekennzeichnet, dass** die Innenquerschnittsfläche R des Rohres (1) zwischen 0,8 und 415 mm², bevorzugt zwischen 13 und 80 mm² und besonders bevorzugt zwischen 20 und 28 mm² liegt.

7. Vorrichtung gemäß einem der vorherigen Ansprüche, **dadurch gekennzeichnet, dass** der Durchmesser der Bohrung (3) zwischen 5 und 30 mm, bevorzugt zwischen 6 und 20 mm und besonders bevorzugt zwischen 7 und 10 mm liegt.

8. Vorrichtung gemäß einem der vorherigen Ansprüche **dadurch gekennzeichnet, dass** die Fläche S des Spaltes (2) zwischen Rohr (1) und Bohrung (3) zwischen 3 und 176 mm², bevorzugt zwischen 6 und 31 mm² und besonders bevorzugt zwischen 8 und 14 mm² liegt.

9. Vorrichtung gemäß einem der vorherigen Ansprüche **dadurch gekennzeichnet, dass** das Rohr (1) aus Tantal, SiC, Zirkoniumoxid, Aluminiumoxid (Sinterkorund), Yttriumstabilisiertem Zirconium(IV)-oxid (YSZ), Quarzglas oder VA-Stahl und bevorzugt aus einem Keramikmaterial besteht.

10. Vorrichtung gemäß einem der vorherigen Ansprüche **dadurch gekennzeichnet, dass** die Vorrichtung einen Sinterraum (5) aufweist, der durch eine Basisplatte (6) und eine Abdeckung (7) gebildet wird und mindestens eine Sintergutschale (8) enthält.

11. Vorrichtung gemäß Anspruch 10, **dadurch gekennzeichnet, dass** die mindestens eine Sintergutschale (8) auf der Basisplatte (6) aufliegt.

12. Vorrichtung gemäß Anspruch einem der Ansprüche 10 oder 11, **dadurch gekennzeichnet, dass** die Basisplatte (6) die Bohrung (3) aufweist.

13. Vorrichtung gemäß einem der Ansprüche 10 bis 12, **dadurch gekennzeichnet, dass** die Sintergutsschale (8) im oberen Bereich offen ist.

14. Vorrichtung gemäß einem der Ansprüche 10 bis 13, **dadurch gekennzeichnet, dass** zwischen der Sintergutschale (8) und der Abdeckung (7) ein vertikaler Abstand von 0,2 bis 20 mm vorgesehen ist.

15. Vorrichtung gemäß einem der Ansprüche 10 bis 14, **dadurch gekennzeichnet, dass** zwischen der Sintergutschale (8) und Abdeckung (7) ein horizontaler Abstand von 0,2 bis 40 mm vorgesehen ist.

16. Vorrichtung gemäß einem der Ansprüche 10 bis 15, **dadurch gekennzeichnet, dass** die Basisplatte (6), die Abdeckung (7) und die Sintergutschale (8) aus den Werkstoffen Siliziumcarbid (SiC), Keramik, Tantal, Zirkoniumoxid, Aluminiumoxid (Sinterkorund), Yttriumstabilisiertem Zirconium(IV)-oxid (YSZ), Quarzglas oder VA-Stahl bestehen.

17. Vorrichtung gemäß einem der vorherigen Ansprüche, **dadurch gekennzeichnet, dass** sie zum Sintern von dentalen Werkstücken geeignet ist.

18. Verfahren zum Sintern von Werkstücken, und insbesondere von dentalen Werkstücken, **dadurch gekennzeichnet, dass** der Sintervorgang mittels einer Vorrichtung gemäß einem der Ansprüche 1 bis 16 erfolgt.
